# FASCICULE DE BREVET EUROPEEN

(11) **EP 3 222 378 B1**
(45) Date de publication et mention de la délivrance du brevet: **07.09.2022**
(21) Numéro de dépôt: 17382118.2
(22) Date de dépôt: 08.03.2017
(51) Int. Cl.: B23D 21/00, B23D 21/08, B23B 5/16

(54) **COUPE-TUBES AVEC CALIBREUR ET ALÉSOIR/ÉBAVUREUR DES BORDS DU TUBE COUPÉ**
ROHRSCHNEIDER MIT KALIBRIERER, UND REIBAHLE/ENTGRATUNGSMESSER FÜR DIE RÄNDER DES ABGESCHNITTENEN ROHRS
PIPE CUTTER WITH CALIBRATOR AND REAMER/DEBURRER OF THE CUT EDGES OF THE PIPE

(30) Priorité: 10.03.2016 ES 201630276; 23.11.2016 ES 201631500
(43) Date de publication de la demande: 27.09.2017
(73) Titulaire: Rothenberger, S.A., 48220 Abadiano (ES)
(72) Inventeur: SAINZ DE DIEGO, Cesar, 48220 ABADIANO (Bizkaia) (ES)
(74) Mandataire: Schupp, Bernhard

(56) Documents cités:
- EP-A1- 2 801 426
- GB-A- 2 234 697
- US-A- 2 761 335

## Description

### Objet de l'invention

L'objet de l'invention fait référence à un coupe-tubes qui incorpore au moins un calibreur et au moins un alésoir/ébavureur dans le corps même du coupe-tubes ; de façon à ce que son utilisation permette :
- en premier lieu de calibrer le bord du tube coupé afin de lui rendre un diamètre égal à celui du diamètre intérieur du tube ;
- puis d'ébavurer et d'aléser (c'est-à-dire de retirer les bavures) ; ces opérations étant réalisées simultanément. Un tel coupe-tubes est connu du document US2761335A.

### Précédents à cette invention

Dans l'état actuel de la technique, les coupe-tubes sont abondamment utilisés. Dans le cadre de l'invention, le terme « coupe-tubes » se réfère aux outils manuels portables utilisés pour couper des tubes ronds, généralement de petit diamètre, employés pour les conduites d'approvisionnements (par exemple de gaz ou d'eau).

Dans l'état actuel de la technique, on connaît même des coupe-tubes auxquels sont incorporés une lame multiusages, dont la principale finalité est, dans la pratique, d'éliminer les bavures qui restent sur les bords du tube après les coupes. Dans, par exemple et entre autres, les documents espagnols ES0145687U et ES1033268, des coupe-tubes munis de lames pour retirer les bavures sont décrits.

### Problème technique à résoudre

Les opérations de coupe des tubes employés pour les conduites d'approvisionnements sont réalisées par pression (le disque de coupe exerce une pression sur le périmètre du tube jusqu'à ce qu'il soit coupé) en raison de laquelle le bord du tube coupé est déformé (avec un diamètre dans cette zone légèrement inférieur au diamètre calibré du tube) et présente des bavures. La réglementation actuelle exige, pour les tubes employés pour les conduites d'approvisionnements, que les bavures soient retirées et que les bords coupés soient ébavurés à l'intérieur et à l'extérieur. Elle exige également un calibrage uniforme de toute la tuyauterie, assemblages et raccordements entre tubes compris.

Pour se conformer à ces exigences, il faut procéder à des opérations très lentes et compliquées à réaliser (quand elles ne sont pas directement impossibles à réaliser) avec les solutions techniques intégrées aux coupe-tubes actuels.

### Description de l'invention

L'objet de l'invention offre une nouvelle solution technique qui permet de recalibrer les bords coupés des tubes (bords déformés au cours de l'opération de coupe) et d'éliminer les bavures sur ces derniers simultanément. Cette solution technique est intégrée dans le corps même du coupe-tubes. De plus, la solution technique objet de l'invention permet d'agir sur des tubes de différents diamètres. Elle se caractérise en ce que :
a) dans le corps (1) du coupe-tubes se trouve, au moins, un calibreur (11), entre lequel et le corps (1) môme du coupe-tubes est délimilée une cavité (12) pouvant, accueillir l'extrémité d'un tube (t) positionné dans ledit calibreur (11) ; chaque calibreur (11) présentant à son extrémité une embouchure (111) qui varie entre un diamètre minimum (dl) à sa base et un diamètre maximum (d) qui coïncide avec le calibre du tube (t) travaillé;b) il comprend dans le corps (1) du coupe-tubes au moins un ébavureur (2), disposé de façon longitudinale au corps (1) et composé d'une ou plusieurs parties (S) munies d'au moins deux bords convergents constituants au moins pour l'un d'eux une lame (21) atteignant ladite cavité (12) ; lesdites parties (S) se trouvent dans un même ébavureur (2), sont de largeurs différentes (SI), (S2), (S3) correspondantes aux différents diamètres des tubes (t) à ébavurer, et peuvent être placées dans n'importe quelle position angulaire par rapport à l'axe principal du coupe-tubes, et les lames (21) situées dans ses différentes parties (S) présentent une zone de coupe chanfrein ; ébavureur dans lequel, simultanément, und lame (21) se trouvant dans une partie (S) continue ébavure/alèse l'extérieur du bord coupé du tube (t) ;c) chaque calibreur (11) est un corps de révolution qui est aligné avec au moins une lame (21) ; de façon à ce qu'en insérant le tube (t) dans le calibreur (11) correspondant et en le tournant, en premier lieu le bord coupé du tube (t) est calibré pour lui rendre un diamètre égal à celui du diamètre intérieur restant du tube (t) et ensuite, lorsque le bord calibré avance dans la cavité (12) correspondante, les lames (21) ébavurent et alèsent simultanément ledit bord.

Si les lames se trouvent dans l'ébavureur, les deux lames contigües de chaque paire atteignent deux zones diamétralement opposées d'une même cavité, réalisant simultanément l'alésage/ébavurage de l'intérieur et de l'extérieur du bord coupé du tube. Il est indifférent, et est inclus dans l'objet de l'invention lorsque les lames se trouvent dans l'ébavureur :
- que lesdites parties munies d'au moins deux bords convergents dont au moins l'un d'entre eux est une lame, se trouvent dans un même ébavureur ou dans des ébavureurs distincts/indépendants ;
- que les lames situées dans lesdites parties de l'ébavureur soient configurées avec une zone de coupe en chanfrein ou deux zones de coupe en angle en « V » ;

Si les lames sont placées directement dans le calibreur, chaque lame atteint une cavité, réalisant l'alésage/ébavurage de l'intérieur du bord du tube coupé. Il est indifférent, et est inclus dans l'objet de l'invention lorsque les lames se trouvent directement dans le calibreur :
- que chaque calibreur soit un élément indépendant fixé sur le corps du coupe-tubes par des vis, rivets ou des moyens similaires ;
- que chaque calibreur intègre en lui-même les lames d'alésage/ébavurage, existant au minimum autant de lames que de calibreurs : chaque calibreur définit dans son périmètre une zone abaissée et inclinée dans laquelle est placée ou s'incorpore directement au moins une lame d'alésage/ébavurage ;

Spécifiquement, dans le corps du coupe-tubes se trouvent, au moins, deux calibreurs alignés de diamètres différents. Entre deux de ces calibreurs, et/ou entre l'un d'eux et le corps même du coupe-tubes, sont délimités au moins deux cavités pouvant accueillir les extrémités de tubes de diamètres différents, positionnés dans le calibreur correspondant ; de façon à ce que, lorsque le bord calibré du tube avance dans la cavité correspondante, les lames du calibreur réalisent l'alésage/ébavurage de l'intérieur du tube.

D'autres configurations et avantages de l'invention peuvent être déduits à partir de la description suivante, et des revendications dépendantes.

### Description des schémas

Pour mieux comprendre l'objet de l'invention, une forme préférentielle de réalisation, pouvant présenter des changements accessoires ne dénaturant pas son fondement, est représentée sur les figures. Dans ce cas :

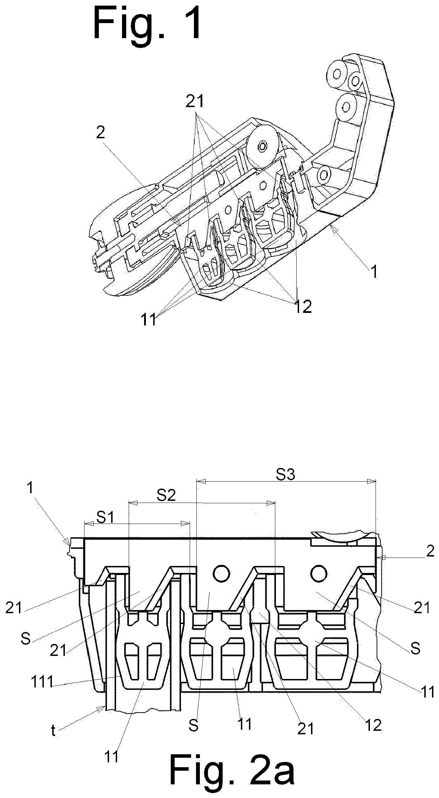

La figure 1 représente une vue générale schématique dans une coupe en perspective d'un coupe-tubes avec calibreur et alésoir/ébavureur des bords du tube coupé, selon l'invention, pour un exemple de réalisation qui accueille des tubes de trois diamètres différents ; dans lequel les lames (21) ébavurent et alèsent simultanément l'intérieur et l'extérieur du bord coupé du tube (t).

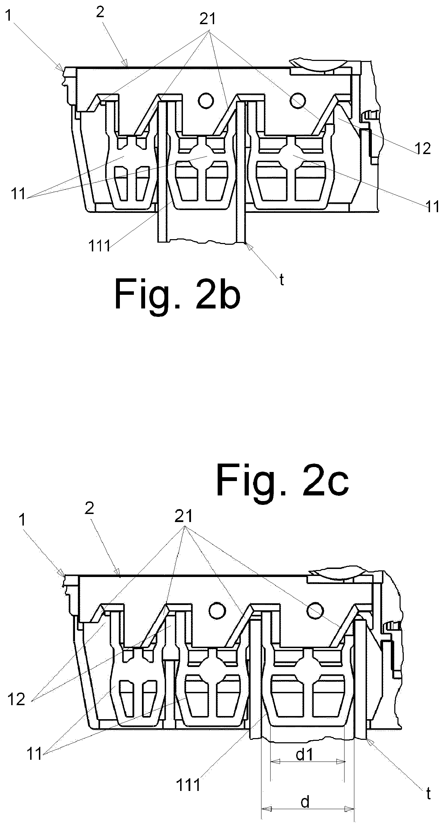

Les figures 2a, 2b et 2c représentent chacune des coupes longitudinales détaillées correspondantes à la réalisation de la figure 1, chacune avec un tube (t) de diamètre différent inséré dans le calibreur correspondant (11) et pour un exemple de réalisation dans lequel les parties (S) munies de lames (21) sont disposées de manière longitudinale dans un même ébavureur (2).

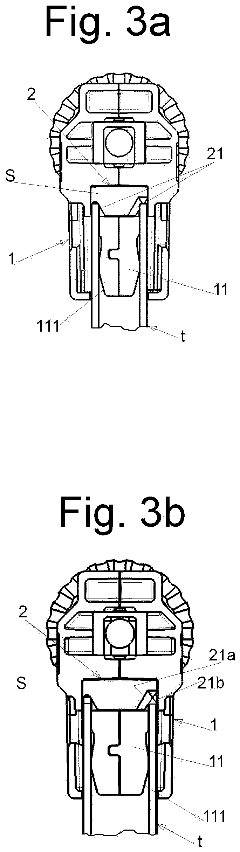

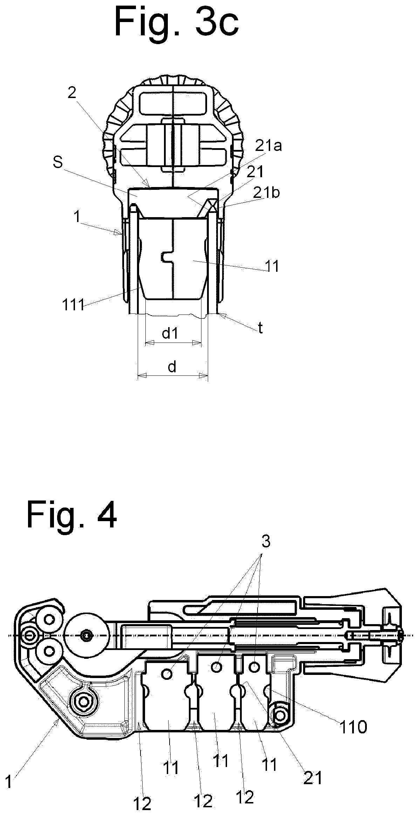

Les figures 3a, 3b et 3c représentent chacune des coupes transversales détaillées correspondantes à la réalisation de la figure 1, chacune avec un tube (t) de diamètre différent inséré dans le calibreur correspondant (11) et pour un exemple de réalisation dans lequel les parties (S) munies de lames (21) sont disposées transversalement dans un même ébavureur (2) ou dans des ébavureurs (2) distincts/indépendants.
La figure 4 représente une vue générale schématique en coupe de l'objet de l'invention, pour un exemple de réalisation qui inclut trois calibreurs (11) fixés à l'aide de vis (3), rivets ou moyens similaires au corps (1) du coupe-tubes ; et chacun d'entre eux définit une zone inclinée (110) qui intègre une lame (21).

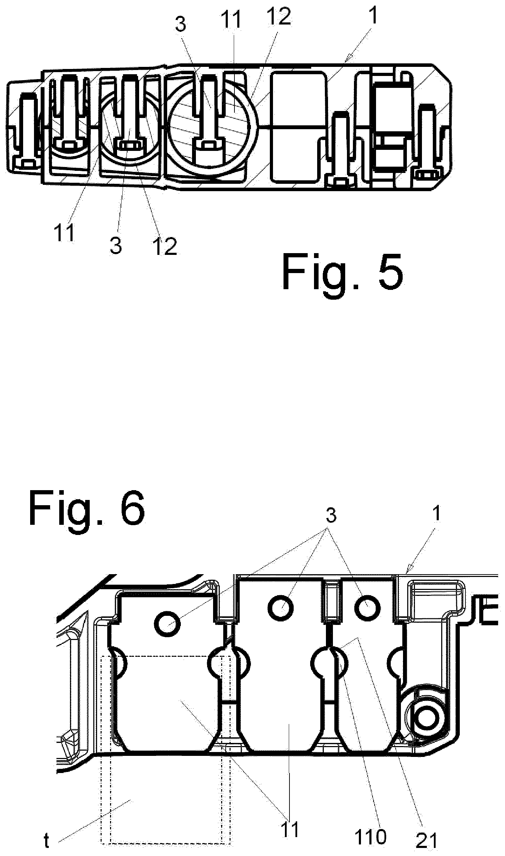

La figure 5 représente une coupe longitudinale détaillée en plan correspondant à la réalisation de la figure 4, permettant d'observer les cavités (12) et la fixation des calibreurs (11) au corps (1) du coupe-tubes.
La figure 6 représente une vue schématique de détail élargi correspondant à la réalisation de la figure 4, permettant d'observer l'intégration des lames (21) dans les calibreurs (11).

Sur la figure 6, un tube (t) en position opérationnelle a été représenté en pointillés.

### Description détaillée d'une réalisation préférentielle

La description suivante concerne un exemple de réalisation pratique, non limitatif, de la présente invention. D'autres modes de réalisation, dans lesquels sont introduits des changements accessoires ne dénaturant pas son fondement, ne sont absolument pas écartés.

L'objet de l'invention fait référence à un coupe-tubes avec calibreur et alésoir/ébavureur des bords du tube coupé.

La solution technique selon l'invention s'applique sur un corps (1) de coupe-tubes et permet, premièrement de calibrer les bords coupés pour retrouver un diamètre égal à celui du diamètre intérieur du tube (t) et ensuite, lors de la même opération, d'ébavurer et d'aléser le bord coupé des tubes (t).

Les opérations d'ébavurage et d'alésage, conformément à la réalisation des figures 1 à 3, sont réalisées de manière simultanée à l'intérieur et à l'extérieur du bord coupé d'un tube (t).

Les opérations d'ébavurage et d'alésage, conformément à la réalisation des figures 4 à 6, sont réalisées de manière simultanée à l'intérieur du bord coupé d'un tube (t).

De plus, cette solution technique permet, pour toutes les réalisations, de calibrer, d'ébavurer et d'aléser des tubes (t) de diamètres différents à l'aide du même coupe-tubes.

Selon l'invention, et selon la réalisation représentée sur les figures 1 à 3, un ou plusieurs calibreurs (11) se trouvent dans le corps (1) du coupe-tubes. Une cavité (12) est délimitée entre chaque calibreur (11) et le corps même (1) du coupe-tubes. Chacune des ces cavités (12) peut accueillir l'extrémité correspondante d'un tube (t), positionné dans le calibreur correspondant (11).

Le nombre de calibreurs (11) n'altère pas les effets de l'invention dès lors que l'ébavureur (2) est muni d'une quantité de lames (21) correspondante.

Le calibreur (11), ou chacun des calibreurs (11) existants, est un corps de révolution qui présente une embouchure (111) à son extrémité. La génératrice de cette embouchure (111) varie entre un diamètre minimum (d1) à sa base et un diamètre maximum (d) qui coïncide avec le calibre du tube (t) travaillé ; de façon à ce qu'en embouchant le bord coupé du tube (t) dans le calibreur (11), il soit recalibré et retrouve un diamètre égal à celui du diamètre intérieur du tube (t).

Dans le corps (1) du coupe-tubes se trouve, au moins, un ébavureur (2) avec une ou plusieurs parties (S) munies d'au moins deux bords convergents ; un des dits bords au moins constituant une lame (21).

Chacune des lames (21) existantes atteint une cavité correspondante (12).

La position angulaire dans laquelle sont positionnées les parties (S) par rapport à l'axe principal des coupe-tubes n'altère pas les effets de l'invention : elles peuvent être disposées dans n'importe quelle position angulaire par rapport à l'axe principal des coupe-tubes.

Sans que cela n'altère non plus les effets de l'invention, le coupe-tubes peut indifféremment disposer d'un seul ébavureur (2) avec plusieurs parties (S) munies de lames (21) ou de plusieurs ébavureurs (2), chacun avec, au moins, une partie (S) munie de lames (21).

Dans l'exemple de la réalisation des figures 1, 2a, 2b et 2c, le coupe-tubes dispose d'un ébavureur (2) positionné de manière longitudinale par rapport à son corps (1) et muni de plusieurs parties (S) de différentes largeurs (S1), (S2), (S3) qui correspondent aux différents diamètres des tubes (t) à ébavurer. Une lame (21) atteint l'extérieur du bord d'un tube (t) et une autre lame contigüe (21) atteint l'intérieur du même bord ; de façon à ce que les deux lames procèdent à l'ébavurage et retirent simultanément les bavures à l'intérieur et à l'extérieur du bord coupé du tube (t).

Dans cet exemple de réalisation :
- en présence d'un calibreur (11), une cavité est délimitée (12) ; l'ébavureur (2) est muni d'une partie (S) qui comprend deux lames (21) pour permettre l'ébavurage/l'alésage de tubes (t) d'un diamètre déterminé ;
- en présence de deux calibreurs (11), deux cavités sont délimitées (12) ; l'ébavureur (2) est muni de deux parties (S) contigües qui comprennent trois lames (21) pour permettre l'ébavurage/l'alésage de tubes (t) de diamètres différents à l'aide d'un même coupe-tubes.
- en général, en présence de « n » calibreurs (11), « n » cavités (12) sont délimitées; l'ébavureur (2) est muni de « n » parties (S) contigües qui comprennent « n+1 » lames (21) pour permettre l'ébavurage/l'alésage de tubes (t) de «n» diamètres différents à l'aide d'un même coupe-tubes.

Les schémas correspondent à un exemple de réalisation dans lequel se trouvent trois calibreurs (11) délimitant trois cavités (12) autour d'eux. L'ébavureur (2) est muni de trois parties (S) contigües de largeurs (S1), (S2), (S3) qui se superposent partiellement comportant quatre lames (21) et, par conséquent, permettant dans cet exemple de réalisation, l'on procède à l'alésage/ébavurage de tubes (t) de trois diamètres différents. La superposition partielle des largeurs (S1), (S2), (S3) réduit la longueur totale de l'ébavureur (2).

Dans l'exemple de réalisation des figures 3a, 3b et 3c, les parties (S) munies de lames (21) peuvent se trouver dans le même ébavureur (2) ou dans des ébavureurs (2) indépendants ; existant dans ce cas un ébavureur (2) pour chaque calibreur (11).

La partie (S), ou chaque partie (S) existante, est munie d'au minimum une lame (21). De préférence, dans chaque partie (S) se trouvent deux lames (21) qui atteignent deux zones diamétralement opposées dans une même cavité (12). Chaque lame (21) présente deux zones de coupe (21a), (21b) en angle en «V» qui, respectivement, procèdent à l'ébavurage et retirent les bavures du tube (t) simultanément à l'intérieur et à l'extérieur de son bord coupé.

Grâce à cette structure et ces particularités, en insérant le tube (t) dans le calibreur (11) correspondant et en le faisant tourner, en premier lieu le bord coupé du tube (t) est calibré pour lui rendre un diamètre égal à celui du diamètre intérieur restant du tube (t) et ensuite, lorsque le bord calibré avance dans la cavité (12) correspondante, les lames (21) ébavurent et alèsent simultanément ledit bord à l'intérieur et à l'extérieur du tube (t).

Selon l'invention et selon la réalisation représentée dans les figures 4 à 6, au moins un calibreur (11) se trouve dans le corps (1) du coupe-tubes ; chaque calibreur (11) étant un élément indépendant fixé sur le corps (1) par des vis (3), des rivets ou des moyens similaires.

Le calibreur (11), ou chaque calibreur (11) s'il y en a plusieurs, consiste en un corps de révolution qui définit dans son périmètre une zone abaissée inclinée (110) dans laquelle est placée ou s'incorpore directement au moins une lame (21) d'alésage/ébavurage. Chaque calibreur (11) intègre dans sa structure les lames (21), avec au moins autant de lames (21) que de calibreurs (11).

Selon l'invention et selon la réalisation représentée dans les figures 4 à 6, le coupe-tubes dispose d'au moins deux calibreurs (11) de diamètres différents. Ces calibreurs (11) sont alignés délimitant entre deux, et/ou entre l'un d'eux et le corps (1) même du coupe-tubes, au moins deux cavités (12) pouvant accueillir les extrémités de tubes (t) de différents diamètres, positionnés dans le calibreur (11) correspondant.

Selon la réalisation représentée, le coupe-tubes dispose de trois calibreurs (11) alignés et fixés au corps (1) par des vis (3), des rivets ou des moyens similaires. Voir la figure 5

Dans cet exemple de réalisation le coupe-tubes dispose de trois calibreurs (11) qui, en conjonction avec le corps (1), délimitent trois cavités (12) : une autour de chaque calibreur (11) en considérant toujours que l'espace commun partagé et délimité par deux calibreurs (11) contigus fait partie de l'une ou de l'autre cavité (12) selon que le tube (t) est inséré dans l'un ou l'autre calibreur (11). Chaque lame (21) intégrée dans un même calibreur (11) atteint une cavité correspondante (12).

En général, en présence de « n » calibreurs (11), il existe au minimum « n » lames et « n » cavités sont délimitées (12) pour permettre l'ébavurage/l'alésage de tubes (t) de « n » diamètres différents à l'aide d'un même coupe-tubes.

Grâce à cette structure, composants et particularités, lorsque le bord calibré d'un tube (t) avance dans la cavité (12) correspondante, la lame (21) correspondante intégrée dans le calibreur correspondant (11) atteint ladite cavité (12) pour procéder à l'alésage/ébavurage à l'intérieur du tube (t).

La quantité de tubes (t) de diamètres différents qui peuvent être calibrés et alésés/ébavurés par un même coupe-tubes est limitée, exclusivement, par les dimensions physiques du corps (1) même du coupe-tubes.

Les matériaux, les dimensions et les proportions peuvent varier, ainsi que, de manière générale, les autres détails accessoires ou secondaires qui ni n'altèrent, ne changent ou ne modifient l'essence-même de la proposition.

## Revendications

1. Coupe-tubes avec calibreur et alésoir/ébavureur des bords du tube coupé, **caractérisé en ce que**:
a) dans le corps (1) du coupe-tubes se trouve, au moins, un calibreur (11), entre lequel et le corps (1) même du coupe-tubes est délimitée une cavité (12) pouvant accueillir l'extrémité d'un tube (t) positionné dans ledit calibreur (11) ; chaque calibreur (11) présentant à son extrémité une embouchure (111) qui varie entre un diamètre minimum (d1) à sa base et un diamètre maximum (d) qui coïncide avec le calibre du tube (t) travaillé;
b) il comprend dans le corps (1) du coupe-tubes au moins un ébavureur (2), disposé de façon longitudinale au corps (1) et composé d'une ou plusieurs parties (S) munies d'au moins deux bords convergents constituants au moins pour l'un d'eux une lame (21) atteignant ladite cavité (12) ; lesdites parties (S) se trouvent dans un même ébavureur (2), sont de largeurs différentes (S1), (S2), (S3) correspondantes aux différents diamètres des tubes (t) à ébavurer, et peuvent être placées dans n'importe quelle position angulaire par rapport à l'axe principal du coupe-tubes, et les lames (21) situées dans ses différentes parties (S) présentent une zone de coupe chanfrein ; ébavureur dans lequel, simultanément, und lame (21) se trouvant dans une partie (S) contigüe ébavure/alèse l'extérieur du bord coupé du tube (t) ;
c) chaque calibreur (11) est un corps de révolution qui est aligné avec au moins une lame (21) ; de façon à ce qu'en insérant le tube (t) dans le calibreur (11) correspondant et en le tournant, en premier lieu le bord coupé du tube (t) est calibré pour lui rendre un diamètre égal à celui du diamètre intérieur restant du tube (t) et ensuite, lorsque le bord calibré avance dans la cavité (12) correspondante, les lames (21) ébavurent et alèsent simultanément ledit bord.

2. - Coupe-tubes, selon la revendication 1, **caractérisé en ce que** dans ledit corps (1) se trouvent plusieurs calibreurs (11) de différents diamètres, entre lesquels et le corps (1) même sont délimitées plusieurs cavités (12) pouvant accueillir les extrémités de tubes (t) de diamètres différents, positionnés dans le calibreur correspondant (11) ; et où les deux lames (21) contigües de chaque paire atteignent deux zones diamétralement opposées d'une même cavité (12).

3. - Coupe-tubes, selon la revendication 1, **caractérisé en ce que** lesdites parties (S) se trouvent dans un même ébavureur (2), et sont de largeurs différentes (S1), (S2), (S3) correspondantes aux différents diamètres des tubes (t) à ébavurer.

4. - Coupe-tubes, selon l'une des revendications 1 et 2, **caractérisé en ce que** les parties (S) se trouvent dans des ébavureurs (2) distincts/indépendants.

5. - Coupe-tubes, selon l'une des revendications 1 à 3, **caractérisé en ce que** chaque partie (S) est disposée de façon transversale au corps (1) du coupe-tubes faisant partie du même ébavureur (2) ou d'ébavureurs (2) indépendants ; et les lames (21) se trouvant dans chaque partie (S) présentent des zones de coupe (21a), (21b) en angle en « V » qui, respectivement, ébavurent et alèsent simultanément l'intérieur et l'extérieur du bord coupé du tube (t).

6. - Coupe-tubes, selon la revendication 1, **caractérisé en ce que** :
a) chaque calibreur (11) est un élément indépendant fixé sur le corps (1) par des vis, des rivets ou des moyens similaires ;
b) chaque calibreur (11) intègre dans sa structure les lames (21), existant au moins autant de lames (21) que de calibreurs (11).

7. - Coupe-tubes, selon la revendication 6, **caractérisé en ce que** chaque calibreur (11) définit dans son périmètre une zone (110) abaissée et inclinée dans laquelle est placée ou s'incorpore directement au moins une lame (21) d'alésage/ébavurage.

## Patentansprüche

1. Rohrschneider mit Kalibrator und Reibahle/Entgrater für die Kanten des geschnittenen Rohrs, **dadurch gekennzeichnet, dass**:
a) sich im Körper (1) des Rohrschneiders mindestens ein Kalibrator (11) befindet, wobei zwischen diesem und dem Körper (1) selbst des Rohrschneiders ein Hohlraum (12) begrenzt ist, der das Ende eines im Kalibrator (11) positionierten Rohrs (t) aufnehmen kann; wobei jeder Kalibrator (11) an seinem Ende eine Mündung (111) aufweist, die zwischen einem minimalen Durchmesser (d1) an seiner Basis und einem maximalen Durchmesser (d), der mit dem Kaliber des bearbeiteten Rohrs (t) übereinstimmt, variiert;
b) er im Körper (1) des Rohrschneiders mindestens einen Entgrater (2) umfasst, der in Längsrichtung des Körpers (1) angeordnet und aus einem oder mehreren Teilen (S) gebildet ist, die mit mindestens zwei konvergierenden Rändern versehen sind, von denen mindestens einer eine Klinge (21) bildet, die den Hohlraum (12) erreicht;
wobei sich die Teile (S) in einem gleichen Entgrater (2) befinden, unterschiedliche Breiten (S1), (S2), (S3) aufweisen, die den verschiedenen Durchmessern der zu entgratenden Rohre (t) entsprechen, und in jeder beliebigen Winkelposition in Bezug auf die Hauptachse des Rohrschneiders angeordnet werden können, und wobei die Klingen (21), die sich in seinen verschiedenen Teilen (S) befinden, einen abgeschrägten Schneidbereich aufweisen; wobei bei dem Entgrater eine Klinge (21), die sich in einem angrenzenden Teil (S) befindet, gleichzeitig die Außenseite der Schnittkante des Rohrs (t) entgratet/abfräst;
c) jeder Kalibrator (11) ein Rotationskörper ist, der mit mindestens einer Klinge (21) ausgerichtet ist; so dass durch Einführen des Rohrs (t) in den entsprechenden Kalibrator (11) und Drehen desselben zunächst die Schnittkante des Rohrs (t) kalibriert wird, um ihr einen Durchmesser zu verleihen, der dem verbleibenden Innendurchmesser des Rohrs (t) entspricht, und anschließend, wenn sich die kalibrierte Kante im entsprechenden Hohlraum (12) weiterbewegt, die Klingen (21) gleichzeitig die Kante entgraten und abfräsen.

2. Rohrschneider nach Anspruch 1, **dadurch gekennzeichnet, dass** sich im Körper (1) mehrere Kalibratoren (11) mit unterschiedlichen Durchmessern befinden, wobei zwischen ihnen und dem Körper (1) selbst mehrere Hohlräume (12) begrenzt sind, die die Enden von Rohren (t) mit unterschiedlichen Durchmessern, die im entsprechenden Kalibrator (11) positioniert sind, aufnehmen können; und wobei die beiden benachbarten Klingen (21) jedes Paars zwei diametral gegenüberliegende Bereiche eines gleichen Hohlraums (12) erreichen.

3. Rohrschneider, nach Anspruch 1, **dadurch gekennzeichnet, dass** sich die Teile (S) in einem gleichen Entgrater (2) befinden und unterschiedliche Breiten (S1), (S2), (S3) aufweisen, die den unterschiedlichen Durchmessern der zu entgratenden Rohre (t) entsprechen.

4. Rohrschneider nach einem der Ansprüche 1 und 2, **dadurch gekennzeichnet, dass** sich die Teile (S) in separaten/unabhängigen Entgratern (2) befinden.

5. Rohrschneider nach einem der Ansprüche 1 bis 3, **dadurch gekennzeichnet, dass** jeder Teil (S) quer zum Körper (1) des Rohrschneiders angeordnet ist und Teil desselben Entgraters (2) oder unabhängiger Entgrater (2) ist und dass die Klingen (21), die sich in jedem Teil (S) befinden, Schneidbereiche (21a), (21b) in einem "V"-Winkel aufweisen, die jeweils gleichzeitig die Innenseite und die Außenseite der Schnittkante des Rohrs (t) entgraten und abfräsen.

6. Rohrschneider, nach Anspruch 1, **dadurch gekennzeichnet, dass**:
a) jeder Kalibrator (11) ein unabhängiges Element ist, das durch Schauben, Niete oder ähnliche Mittel am Körper (1) befestigt ist;
b) jeder Kalibrator (11) in seine Struktur Klingen (21) integriert, wobei mindestens so viele Klingen (21) wie Kalibratoren (11) vorhanden sind.

7. Rohrschneider nach Anspruch 6, **dadurch gekennzeichnet, dass** jeder Kalibrator (11) in seinem Umfang einen abgesenkten und geneigten Bereich (110) definiert, in dem mindestens eine Fräs-/Entgratklinge (21) angeordnet oder direkt eingebracht ist.

## Claims

1. Pipe cutter with calibrator and reamer/deburrer for the edges of the cut pipe, **characterized in that**:
a) in the body (1) of the pipe cutter there is at least one calibrator (11), between which and the very body (1) of the pipe cutter is delimited a cavity (12) that can accommodate the end of a pipe (t) positioned in said calibrator (11); each calibrator (11) having at its end a mouth (111) that varies between a minimum diameter (d1) at its base and a maximum diameter (d) that corresponds to the calibre of the worked pipe (t) ;
b) it comprises, in the body (1) of the pipe cutter, at least one deburrer (2), disposed so that it is longitudinal to the body (1) and made up of one or more parts (S) provided with at least two convergent edges, at least one of them constituting a blade (21) reaching said cavity (12); said parts (S) are in a single deburrer (2), are of different widths (S1), (S2), (S3) corresponding to the various diameters of the pipes (t) to be deburred, and can be placed in any angular position with respect to the main axis of the pipe cutter, and the blades (21) situated in its various parts (S) have a chamfered cutting zone; in which deburrer, simultaneously, a blade (21) in a contiguous part (S) deburrs/reams the outside of the cut edge of the pipe (t);
c) each calibrator (11) is a body exhibiting symmetry of revolution that is aligned with at least one blade (21); such that by inserting the pipe (t) in the corresponding calibrator (11) and rotating it, first the cut edge of the pipe (t) is calibrated to give it a diameter equal to that of the remaining inner diameter of the pipe (t) and then, when the calibrated edge advances in the corresponding cavity (12), the blades (21) simultaneously deburr and ream said edge.

2. Pipe cutter according to Claim 1, **characterized in that** in said body (1) there are a plurality of calibrators (11) of various diameters, between which and the very body (1) are delimited a plurality of cavities (12) that can accommodate the ends of pipes (t) of different diameters, positioned in the corresponding calibrator (11); and wherein the two contiguous blades (21) of each pair reach two diametrically opposite zones of a single cavity (12) .

3. Pipe cutter according to Claim 1, **characterized in that** said parts (S) are in a single deburrer (2), and are of different widths (S1), (S2), (S3) corresponding to the various diameters of the pipes (t) to be deburred.

4. Pipe cutter according to either of Claims 1 and 2, **characterized in that** the parts (S) are in separate/independent deburrers (2).

5. Pipe cutter according to one of Claims 1 to 3, **characterized in that** each part (S) is disposed so that it is transverse to the body (1) of the pipe cutter forming part of the same deburrer (2) or of independent deburrers (2); and the blades (21) that are in each part (S) have cutting zones (21a), (21b) forming a V-shaped angle that, respectively, simultaneously deburr and ream the inside and the outside of the cut edge of the pipe (t).

6. Pipe cutter according to Claim 1, **characterized in that**:
a) each calibrator (11) is an independent element fastened to the body (1) by screws, rivets or similar means;
b) each calibrator (11) integrates in its structure the blades (21), there being at least as many blades (21) as there are calibrators (11).

7. Pipe cutter according to Claim 6, **characterized in that** each calibrator (11) defines in its perimeter a lowered and inclined zone (110) in which is placed or directly incorporated at least one reaming/deburring blade (21).
